# EUROPEAN PATENT SPECIFICATION

(11) **EP 3 085 047 B1**
(45) Date of publication and mention of the grant of the patent: **08.07.2020**
(21) Application number: 13829039.0
(22) Date of filing: 20.12.2013
(51) Int. Cl.: H04L 29/06, H04W 12/06

(54) **METHOD OF IMPROVING SECURITY IN A COMMUNICATION NETWORK AND AUTHENTICATION ENTITY**
VERFAHREN ZUR VERBESSERUNG DER SICHERHEIT IN EINEM KOMMUNIKATIONSNETZWERK UND AUTHENTIFIZIERUNGSEINHEIT
PROCÉDÉ POUR AMÉLIORER LA SÉCURITÉ DANS UN RÉSEAU DE COMMUNICATION ET ENTITÉ D'AUTHENTIFICATION

(43) Date of publication of application: 26.10.2016
(73) Proprietor: Vodafone GmbH, 40549 Düsseldorf (DE)
(72) Inventor: BINDRIM, Walter, 45721 Haltern am See (DE); FERNANDES, Antonio, 40489 Düsseldorf (DE)
(74) Representative: Müller & Schubert
(86) International application number: PCT/EP2013/077644
(87) International publication number: WO 2015/090436

(56) References cited:
- EP-A1- 2 282 474
- WO-A1-2011/009496
- WO-A2-2010/013914

## Description

In view of the growth of mobile network traffic, it has been considered to provide the possibility to use mobile data over WiFi technology as an additional radio access network. In this approach, the existing infrastructure of mobile core networks is to be used to a large extent. However, also security within the communication network should not be decreased, when WiFi access networks are being used.

In this respect, it has already been proposed to provide authentication methods, such as EAP-SIM /AKA, WPA2 and so called IPsec tunnels for WiFi access to a mobile packet core network, which is also referred to as Mobile Operator Network (MNO).

Whereas the identification of the person of the user of the communication network may be considered in such approaches, for example by means of using the Mobile Subscriber Integrated Services Digital Network-Number (MSISDN) representing the subscriber identification, the overall security remains flawed.

In particular, the authorization of a mobile device to be used in a communication network cannot be monitored or denied is such approaches.

In addition, WO 2010/013914A2 discloses a method for permitting a UE to conditionally access an evolved packet core network. Therein an access of an unauthorized UE may be denied even if the UE does access the EPC network via non-3GPP access network. The request for a device identification is directed towards the UE.

Furthermore, EP 2 282 474 A1 discloses a system for secure mobile communication, wherein an authentication server issues a request for a fingerprint to the mobile device.

Finally, WO 2011/009496 A1 discloses terminal identifiers in a communications network. The IMEI is used in addition to the IMSI in order to create a unique identifier for each terminal. The request for the IMEO is sent to the terminal.

The problem underlying the present invention is thus to provide means for increasing security in a communication network, in particular for ensuring legitimate usage of mobile devices in the communication network.

The invention is based on the finding that this problem can be solved, by providing information relating to the mobile device to the mobile packet core network when a wireless radio access network, in particular WiFi network, is used to access a mobile packet core network.

According to the invention, the problem is thus solved by a method of improving security in a communication network, said method comprising the features of independent claim 1.

The communication network according the present invention comprises a mobile device, a core network, a mobile packet core network and a wireless radio access network.

The mobile device can be a mobile phone, smart phone or any other mobile communication terminal capable of connecting to a wireless radio access network. The mobile device may also be referred to as user equipment (UE), mobile terminal or mobile station (MS). In particular the mobile device is a mobile communication terminal of the mobile packet core network. That means the mobile device is capable of connecting to the mobile packet core network also via radio access networks which are different from the wireless radio access network, for example GRAN, GERAN, UTRAN or E-UTRAN.

The core network is preferably a packet switched PS domain network. Via the core network, the mobile device can access for example the Internet.

The mobile packet core network is also referred to as the Mobile Network Operator (MNO) network: The mobile packet core network can in particular be 2G/ 3G / LTE networks according to the 3GPP standards. The mobile packet core network comprises entities such as data bases, for example Home Location Register (HLR), Visitor Location Register (VLR), Equipment Identity Register (EIR) as well as service entities such the Mobile Switching Centre (MSC), Short Message Service Centre (SMSC) and an Authentication, Authorization and Accounting Server (AAA server). The AAA server will hereinafter also simply be referred to as AAA.

The wireless radio access network is a radio access network for access to the mobile packet core network. It should be noted that this radio access network hereinafter will be referred to as wireless radio access network in order to distinguish it from other radio access networks which may be used by the mobile device to access the mobile packet core network. The wireless radio access network can in particular be a wireless local area network (WLAN) and most preferably a WiFi (Wireless Fidelity) network. The WiFi network is in particular a network governed by the protocol IEEE 802.11 which defines the communication in this network.

In the communication network according to the invention, wireless radio access technology is thus combined with the communication via mobile packet core network for accessing the core network, for example for retrieving content from the internet.

According to the present invention, an identification of the mobile device is interrogated from the mobile device during connection setup of the mobile device via the wireless radio access network to the mobile packet core network. The identification of the mobile device is preferably a unique identification for each individual mobile device. Preferably, the identification of the mobile device is the International Mobile Equipment Identity (IMEI) of the mobile device. Interrogating this identification from the mobile device according to the invention refers to obtaining this information from the mobile device. The interrogation or obtaining is performed during the connection setup. A connection setup is the establishment of a communication connection from the mobile device via the wireless radio access network to at least one unit of the mobile packet core network. This connection is established for ultimately providing access to an access node for the core network from the mobile device.

It should be noted that connection and access in this context are not referred to as physical connections or access but rather as establishment of channels for transmitting signals for communication via the communication network.

As the identification of the mobile device is interrogated during connection setup of the mobile device via the wireless radio access network to the mobile packet core network, the currently used mobile device can be identified. In addition, as the connection setup in general requires an authentication step, information, such as an MSISDN of the user of the mobile device, which is necessary for determining the identification of the mobile device and establishing a relation between the user and the mobile device, will be available in the communication network.

By providing the identification of the mobile device at the beginning of a communication connection in the communication network, this information may be used for various purposes within the communication network. In particular, it will be possible to monitor the usage of a mobile device or to deny the usage of a mobile device in the communication network. Thereby, the Mobile Network Operator MNO will be able to fulfil legal requirements. For example, a mobile device which has been registered as being stolen, may be prohibited from being used in the communication network. The case of prohibiting usage of the mobile device can also be referred to as lawful interception (LI). In addition to prohibiting, LI may also comprise the monitoring of the usage of mobile devices. The prohibiting and monitoring is preferably carried out by a third party, for example Law Enforcement Agency (LEA), which may have an interface to one or more of the entities of the communication network. In particular the LEA will have an interface with an access node for the core network, for example the Gateway GPRS support node (GGSN) or Packet Data Network (PDN) Gateway (P-GW).

With normal WiFi access to the mobile packet core network or core network, so far only the identity of the user, for example the MSISDN can be provided through the WiFi network and is thus available and can be used in the communication network. Therefore LI with respect to the mobile device is currently not possible for cases where a mobile device connects to the mobile packet core network or core network via WiFi network. It should be noted that also the Equipment Identity Register (EIR) which may be present in the mobile packet core network, can to date not sufficiently assist in LI. The EIR which may also be referred to as an IMEI Server, is used by the MNO to store the IMEI of devices of subscribers. This information may, however, not represent the current situation, in particular may not reflect the mobile device actually used for access of the mobile packet core network via the wireless radio access network.

With the present invention these drawbacks can be overcome, as the IMEI is interrogated at the initiation of the communication connection from the mobile device and thus reflects the current situation. As the IMEI is provided to the mobile packet core network, it will be accessible by other parties which are connected to the mobile packet core network and this information is thus available for LI. Hence, the present invention provides increased security in the communication network.

According to the invention, for interrogating an authentication entity of the mobile packet core network triggers the mobile device (UE) to provide an identification of the mobile device (IMEI) to at least one entity of the mobile packet core network.

The authentication entity is an entity at which in particular the subscriber may be authenticated and his authorizations may be checked. One advantage of using this entity for triggering interrogation of the IMEI is that irrespective of the type of WiFi access, that means trusted or untrusted access, the authentication and authorization of the subscriber is checked before a data connection is established. Thereby, the authentication unit will be aware of the fact that the mobile device is trying to access the mobile packet core network via a WiFi access network and can initiate the necessary steps. In particular, the authentication entity will trigger the mobile device to provide the IMEI to at least one entity of the mobile packet core network. By triggering the mobile device by the authentication entity, no changes at the mobile device are required. In particular no routine for sending the IMEI has to be established at the mobile device. As the mobile device will be triggered to provide the IMEI to an entity of the mobile packet core network, this information will be available for further usage, in particular for LI, in the network.

The triggering of the mobile device by the authentication entity is preferably not carried out directly from the authentication entity to the mobile device but via at least one other entity of the mobile packet core network. Thereby, no additional changes to the communication protocol of the mobile device and the radio access network have to be implemented. As the authentication entity triggers the provision of the IMEI from the mobile device, the provision can be timed, that means the provision will only be triggered if the authentication entity detects that a communication connection is to be established. This detection may be due to the fact that an authentication procedure such as Extensible Authentication Protocol, for GSM Subscriber Identity Module / Authentication and Key Agreement (EAP SIM /AKA) is carried out by the authentication entity.

According to a preferred embodiment, the authentication entity is an authentication, authorization and accounting (AAA) server of the mobile packet core network. As this AAA server is used for mobile communication from the mobile device to the mobile packet core network also via radio access networks which are different from the wireless radio access network, in particular the WiFi network, communication between the AAA server and the other entities of the mobile packet core network is defined and established protocols can be used. One additional advantage of using the AAA server as the authentication entity according to the present invention is that the AAA server is collocated or can communicate with other databases such as the Home Location Register (HLR) of the mobile packet core network and with service entities such as the Short Message Service Centre (SMSC) of the mobile packet core network. In addition, the AAA server is an entity which is used for authentication of the WiFi access for example by means of EAP SIM /AKA. Hence, the AAA server will have the information that a communication connection is to be setup and can initiate the necessary steps, in particular triggering the provision of the IMEI from the mobile device.

The wireless radio access network, which according to the present invention is used to access the mobile packet core network to ultimately access the core network, is preferably a Wireless Local Area Network (WLAN) and most preferably a WiFi network. The description of the invention will therefore mainly be done with reference to WiFi. In a preferred embodiment, the access via the WiFi network is a trusted access. The trusted access may use SaMOG (S2a Mobility based On GTP &WLAN access to EPC) or other WiFi access functions in particular similar solutions for 3G.

According to a preferred embodiment, the communication between the mobile device and the mobile packet core network for providing the identification of the mobile device (IMEI) is carried out via a radio access network which is different from the wireless radio access network, which is used according to the present invention for access to the core network of the communication network via the mobile packet core network. The communication for interrogating the IMEI from the mobile device is preferably carried out via a radio access network of the MNO such as for example GRAN, GERAN, UTRAN or E-UTRAN. This embodiment is preferred as the limitations which exist in wireless radio access networks such as WiFi, do not apply. In addition, the radio access networks of the MNO in general provide routines or protocols for investigating or interrogating information from the mobile device. No changes to communication protocols for these radio access networks are hence necessary. As the communication for interrogation circumvents the wireless radio access network, in particular WiFi, also no changes to the protocol underlying this wireless radio access network are necessary. Therefore, this embodiment allows for an increase in security with minimal changes to the communication network and the underlying protocols and can thus easily be implemented. In particular, for embodiments where the wireless radio access network is a WiFi network and the authentication entity is a AAA server, additional advantages can be achieved. The AAA server is used in this concept of the network for authenticating the user of the mobile device, that means the subscriber. Hence, the AAA server already is designed for communicating with other entities of the mobile packet core network for the authentication. Therefore the link between the communication via WiFi, which is to be established, and the communication via the MNO radio access network for interrogation of the IMEI is embodied in the AAA server. In particular, the relation between the subscriber, for example the MSISDN, and the IMEI will be available at the AAA server. Thereby, the increase of security for the communication network is achieved with minimal changes to the existing network.

The radio access network which is different from the wireless radio access network may also be referred to as macro network and may be a 2G, 3G or LTE access network. In cases where for some reason there is no connection to the macro network and hence interrogation of the IMEI is not possible, the AAA server may use the last known IMEI information from the EIR and/or HLR. Thereby, also in cases of low coverage or other reasons for lack of connection to the macro, an IMEI can be provided.

As explained above, the triggering of the provision of the identification of the mobile device (IMEI) is initiated from the authentication entity towards a further entity of the mobile packet core network. Initiation of the triggering to a different entity of the mobile packet core network is advantageous as the other entity may be equipped and designed for communication with the mobile device via a different radio access network. It should be noted that the communication between the further entity of the mobile packet core network and the mobile device will also not be carried out directly, but may include different components of the radio access network of the MNO, such as base stations. By triggering the mobile device to provide its IMEI through a further entity of the mobile packet core network the existing problem that no communication of an IMEI via the WiFi network is provided so far can be solved.

According to a preferred embodiment, the authentication entity activates another entity of the mobile packet core network to send at least one message to the mobile device. The message may be sent to the mobile device directly from that entity which has been activated by the authentication entity or may be sent by another entity of the mobile packet core network. In this embodiment, a communication from the mobile packet core network to the mobile device for interrogation of the IMEI can be initiated by the authentication entity even though the authentication entity may not be equipped or designed for a type of communication with the mobile device which allows interrogation of the IMEI.

According to one embodiment, the interrogation of the identification of the mobile device is initiated by a policy defined in the at least one other entity of the mobile packet core network towards which the authentication entity initiates the triggering.

According to one embodiment, for example the authentication entity triggers the short message service centre (SMSC) to send at least one text message to the mobile device. In this embodiment, the SMSC is the further entity of the mobile packet core network towards which the authentication entity and in particular the AAA server initiates the provision of the IMEI. In this embodiment, routines or policies established for the communication of the mobile device via the mobile packet core network may be applied. The policy may for example define that the mobile device is to perform an internal IMEI check upon receipt of a specific text message or upon receipt of a specific number of text messages. The policy may further define that the result of the IMEI check, in particular the current IMEI is to be transmitted to the EIR or IMEI server, which is thereby updated. Also in this embodiment, the interrogation of the IMEI can thus be carried out without the necessity of changing existing rules or policies.

According to a preferred embodiment, the SMSC sends multiple zero text messages (SMS) to the mobile device and the mobile device upon receipt of the multiple zero text messages sends its IMEI to a register EIR of the mobile packet core network. Zero text messages refer to text messages with no entry in the text fields. The number of text messages, which is required before the mobile device conducts the internal IMEI check and sends the IMEI to the EIR, can be defined in the policy in the mobile packet core network. This policy may for example be defined in the Visitor Location Register (VLR) of the mobile packet core network.

After the current IMEI has been sent to the EIR, the authentication entity, in particular the AAA which initiated the interrogation, can retrieve the current IMEI from the EIR. As the EIR will thereby have the up to date information on the mobile device which is being used for the communication connection via the wireless radio access network, the authentication entity will be able to provide this up to date information, in particular IMEI to the access node to the core network.

In a different embodiment, the authentication entity will send a request for the IMEI to the HLR of the mobile packet core network. This embodiment is advantageous as the traffic which would be caused by sending text messages in the previously described embodiment can be avoided. The request to the HLR can be transmitted in a standard Any Time Interrogation (ATI) request. As the HLR will recognize this request, it can then initiate the appropriate steps. In particular a Provide Subscriber Information (PSI) request will be established by the HLR upon receipt of the ATI request. This PSI request will then be send to the Mobile Switching Centre (MSC) and/ or to the serving GPRS support node (SGSN) / Mobility Management Entity (MME) of the mobile packet core network. The MSC / SGSN / MME will then investigate the IMEI from the mobile device, for example by paging. The MSC / SGSN / MME will then locate the proper VLR of the subscriber and retrieve the IMEI of the subscriber. The HLR is updated correspondingly, and the current IMEI is provided to the authentication entity in an ATI response.

In this embodiment the authentication entity, in particular the AAA sever will act as a gsmSCF. This function is defined in the Customised Applications for Mobile networks Enhanced Logic (CAMEL) standard. The authentication entity hence is the service control function and supports CAP and in particular relevant parts of MAP protocol. Via this function the authentication entity can request the IMEI from the HLR which in turn will obtain the requested information via a MAP PSI to the MSC and paging from the MSC to the mobile device.

According to the present invention, the current identification of the mobile device (IMEI) is preferably transmitted to an access node for the core network. This access node may be the GGSN or P-GW. The advantage of transmitting the up to date IMEI to the access node is that this information will thus be available to the core network and can be distributed as needed. In addition, this access node may be accessible by third party organizations such as a LEA. Also the data connection via which content may be requested by a mobile device will be delivered through this access node and monitoring and/or intercepting of a connection to and from a mobile device can thus easily be carried out at this access node.

According to a preferred embodiment, the interrogated identification (IMEI), that means the up to date IMEI, is embedded in a standard message at the authentication entity and sent to an access node for the core network (GGSN, P-GW). In particular, the IMEI can be sent to the GGSN, P-GW in a Radius ACCT Start Message. According to a preferred embodiment, the access node comprises or is connected to a trusted gateway. The trusted gateway may be a WiFi access function such as SaMOG or an equivalent entity for a 3G network. The Radius ACCT message is preferably sent from the AAA to the SaMOG or an equivalent entity for a 3G network which may be incorporated in or connected to the P-GW and GGSN, respectively.

According to a preferred embodiment, the identification of the mobile device is checked at least when traffic is requested from the mobile device from the core network. Preferably, the identification is checked by applying a filter which may be set for example at the GGSN, P-GW. The filter may be set by a third party, in particular the LEA. In any case, the lawful usage of the mobile device can be determined or a lawful interception can be applied as the current mobile device is identified towards the communication network with its IMEI.

According to a further aspect, which is not part of the claims, an authentication entity of a mobile packet core network of a communication network is described. The authentication entity is characterized in that the authentication entity has a detection unit for detecting setup of a communication connection from a mobile device via a wireless radio access network to the mobile packet core network, in that the authentication entity comprises a triggering unit for triggering the mobile device to provide identification of a mobile device to at least one entity of the mobile packet core network and
in that triggering unit is a unit for configuration of a request to be sent to another entity of the mobile packet core.

The units of the authentication entity may be implemented as hardware or software. The units may also at least partially be combined with other units of the authentication entity. The authentication entity is preferably the AAA server of a mobile packet core network.

Features and advantages which have been described with respect to the inventive method also apply to the authentication entity and vice versa and may thus only be described once.

The detection unit may be a unit which monitors whether an authentication routine is carried out at the authentication device which indicates that a connection from a mobile device via a wireless radio access network, in particular a WiFi network is being requested. The authentication routine may be an EAP-SIM /AKA method. By detecting the setup of a communication connection via a wireless radio access network, in particular WiFi, at the authentication entity, in particular AAA server, an interrogation of the IMEI of the mobile device as described above can be started and the current IMEI will thus be made available during the setup.

The authentication entity comprises a triggering unit for triggering the mobile device to provide identification of a mobile device to at least one entity of the mobile packet core network. This unit is a unit for configuration of a request to be sent to another entity of the mobile packet core. Most preferably, the triggering unit is a unit for either generating a request to the SMSC for sending at least one text message to the mobile device or generating an ATI request as the request for IMEI to be sent to the HLR.

According to a further embodiment, the authentication entity further comprises an embedding unit for embedding the identification of the mobile device into a message towards an access node for the core network. This unit is preferably connected to or integrated in the unit of the authentication entity for generating a Radius ACCT start message.

The authentication entity is preferably designed to be employed in a method according to the invention.

With the present invention it will be possible for the MNO to address the problem of the exponential growth in mobile data traffic by using multiple radio access technologies. Beside macro networks like 3G - UMTS, 4G - LTE and the corresponding Femto Cells also Wireless LAN or WiFi are possible. With WiFi it is most common to offload of mobile data into for example an open (free access) or a customer owned WiFi. This requires that the user will manually connect to the WiFi network and uses authentication methods like e.g. WPA2, or internet portals. These methods are from security point of view untrusted. In comparison trusted networks use authentication methods like e.g. EAP-SIM / AKA which is using the MNO infrastructure to authenticate the user. With the present invention at least the trusted network usage can be improved by also providing information on the mobile device to the network and thus allowing LI.

In order to provide seamless service behaviour MNOs not only support authentication but may also terminate the mobile data traffic into the mobile networks (for example GGSN, P-GW). The advantages are the service parity between WiFi and macro networks. This will offer customers a trusted environment. To offer an end to end trusted environment it is mandatory that all network elements are trusted. In case of an open WiFi therefore and IPSec tunnel between the terminal and the MNO network is required. For a MNO trusted environment based on self build or wholesale agreements a specific IPSec tunnel in not required.

Standards for untrusted access are TTG (Tunnel Terminating Gateway) and ePDG (enhanced Packet Data Gateway). Trusted access uses e.g. SaMOG (S2a Mobility based On GTP & WLAN access to EPC) or a similar solution based on MNO requests for 3G based infrastructure.

In some mobile packet core networks the functions (TTG, ePDG, SaMOG) were included as a software update into the core network infrastructure. Due to this the MNO can offer the same services but at the same time like charging, security or legal requirements have to be fulfilled. In particular the security and legal requirements can be fulfilled with the present invention.

Mobile operators have strict requirements from legal and/or regulatory bodies to perform lawful interception (LI) on mobile subscribers using either MSISDN representing the subscriber identification or IMEI which represents the identification as the name already says the mobile device.

However, for mobile phones with WiFi connections terminating on the mobile packet core (GGSN, P-GW, BNG, etc.) so far no standards have been defined in order to obtain the required IMEI. The mobile phones will typically use EAP-SIM /AKA credentials which allow the mobile packet core network to derive the corresponding MSISDN but no additional information from the UE. This limits the use of LI when IMEI is needed to achieve this requirement.

With the present invention several embodiments to achieve the goal of LI based on identification of the mobile device, in particular IMEI, when having connection via a wireless radio access network, in particular WiFi connections, terminated in the mobile packet core network are provided.

Being the objective to pass the identification of the mobile device, in particular IMEI information, to the core network, which may also be referred to as packet core and which will then activate (or not) LI for that equipment, according to the present invention, the determination and passing of the IMEI is done during the setup of a data connection.

For both models (trusted and untrusted) access via WiFi, a create packet data protocol (PDP) context message is sent from the WiFi access function, which may be Sa MOG, ePDG or TTG respectively to the GGSN/P-GW/etc. These later nodes will then perform the LI based on pre-configured rules. It is therefore advantageous that according to the present invention, the IMEI information can be made available on Sa MOG, ePDG or TTG.

For the trusted model, trusted gateway, e.g. SaMOG, will send create PDP context after AAA trigger. The AAA is actually the initial node that performs EAP-SIM /AKA authentication and authorization. Only after this step is successful, then the next step will follow (Radius ACCT start message from AAA to the trusted gateway).

It is this message (Radius ACCT Start) that will be used to carry information such as MSISDN, APN, etc. According to the present invention IMEI can be added to this message, making it available for trusted gateway to send it afterwards to the packet core.

According to the present invention the AAA will preferably be enriched with logic that allows the retrieval of IMEI information of the device passing it to the Radius ACCT start message.

AAA can get IMEI from the IMEI server (if the mobile operator has one) and this will contain the last IMEI used by the subscriber. This information, however, might not be the most updated one, hence, according to the invention, this information is retrieved on the fly ensuring the accuracy and validity of it.

The invention will now be described again with reference to two embodiments depicted in the enclosed figures, wherein:
Figure 1: shows a schematic diagram of entities of a communication network used in a first embodiment of the inventive method;
Figure 2: shows a schematic flow diagram indicating the signal flow in the first embodiment of the inventive method;
Figure 3: shows a schematic diagram of entities of a communication network used in a second embodiment of the inventive method; and
Figure 4: shows a schematic flow diagram indicating the signal flow in the second embodiment of the inventive method.

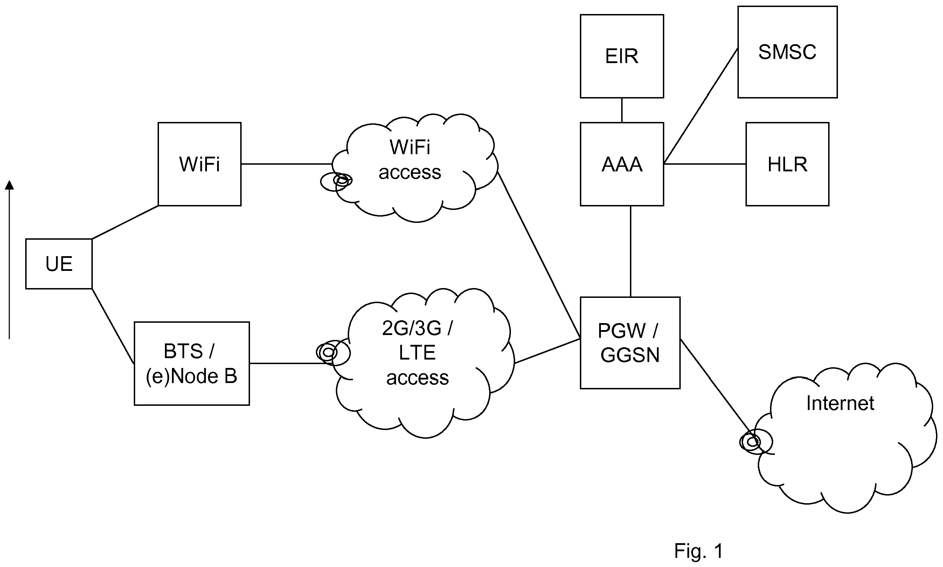

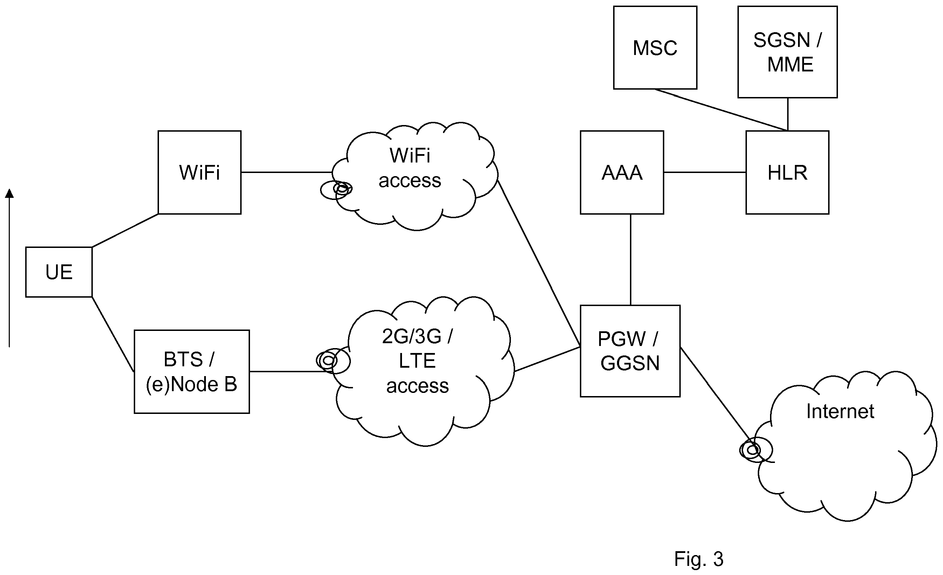

In Figures 1 and 3 only those entities of the communication network which are being used for the method according to the invention and which play a major role in carrying out the method are depicted. Further entities will be present and may be used. As the communication in a communication network is known these additional entities are not specifically shown or mentioned. In addition, for sake of clarity, only one mobile device UE is shown in the figures, it is, however, obvious that several mobile devices may be part of the communication network.

In Figure 1 two different radio access networks are shown. The upper radio access network is a wireless radio access network according to the invention and in particular is a WiFi network with its WiFi access points. The lower radio access network is a 2G/3G/LTE network with its Base stations BTS or nodes (e)NodeB.

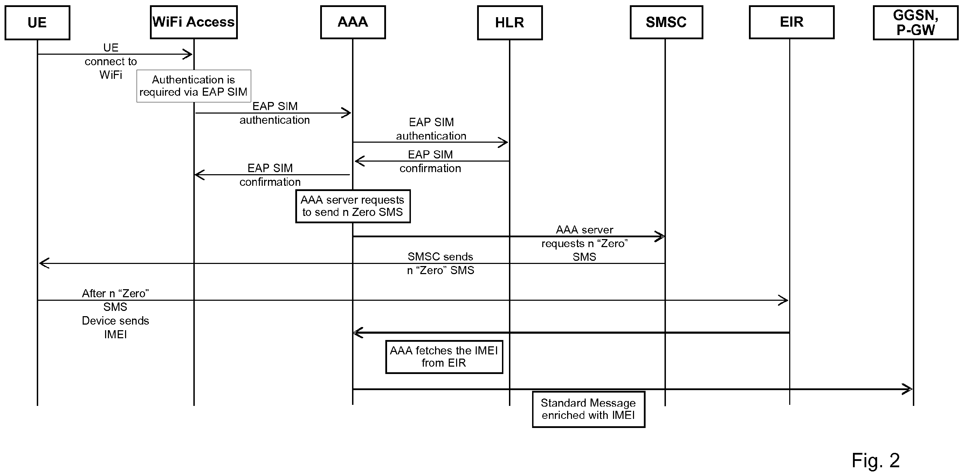

As can be derived from Figure 2, in a first embodiment of the inventive method, the mobile device is connected to the lower radio access network, which may also be referred to as a macro and is different from the wireless radio access network. The macro may for example be an LTE access network accessible via an eNodeB. If the mobile device moves from the macro to WiFi network, i.e. a wireless radio access network according to the invention, an authentication process will be initiated. For example upon connection to the WiFi, EAP SIM authentication may be required. In this authentication process, an EAP SIM request will be sent to the AAA, which is the authentication entity according to the present invention. A respective request will then be sent from the AAA to the HLR. If the user can be authenticated, the HLR will confirm the request in a EAP SIM confirmation. Upon receipt of this confirmation, an EAP SIM confirmation will be forwarded to the WiFi Access network from the AAA. At the same time or subsequently, the AAA will send a request to the SMSC requesting the SMSC to send n times a "zero"-SMS to the mobile device. By sending this request to the SMSC, the triggering of the provision of the identification of the mobile device (IMEI) is initiated from the AAA towards the SMSC as a further entity of the mobile packet core network. After n "zero"-SMS have been received at the mobile device, the mobile device preferably performs an internal check or look-up of its IMEI. The IMEI of the mobile device is then sent from the mobile device to the EIR and thus to an entity of the mobile packet core network which is different to both the AAA and the SMSC. The EIR is updated accordingly and the AAA server can now obtain or fetch the up to date IMEI of the mobile device from the EIR. The AAA thus has the relation between the MSISDN, which was provided during the EAP-SIM authentication and the IMEI. The AAA can then embed the obtained IMEI into a message to the access node for the core network. The IMEI can in particular be embedded into a message to the GGSN or P-GW, depending on the mobile packet core network used. The message which is enriched by the IMEI may for example be a Radius ACCT start message.

The main steps of an example of the method according to the first embodiment may thus be described as follows:
1. Mobile device is connected to the macro and starts moving to WiFi
2. For authentication an EAP-SIM request is sent to the AAA server
3. AAA server sends request to HLR and HLR confirms
4. User gets WiFi IP address via the DHCP Server
   As in this embodiment the mobile device is considered to connect via a trusted network no further activities are required. In case of untrusted and the use of IPSec an EAP-SIM authentication is required to establish the IPSec tunnel.
5. AAA server sends a request to the SMSC to send n times a "Zero"-SMS to the mobile device
6. Mobile device sends after n "Zero" SMS the IMEI to the EIR - Equipment Identity register and updates the EIR
7. AAA Server fetches the IMEI from EIR, therefore the AAA Server has the relation between MSISDN and IMEI. AAA server sends an IMEI enriched message to the GGSN
8. User requests content located in the Internet via WiFi
9. LEA is setting a filter on that IMEI and as the system now has the relationship LI would be possible.

According to the first embodiment, the IMEI is derived from the mobile device by having a policy in the VLR (Visited Location Register). The VLR gets forced to check every n times, wherein n is configurable, an SMS (MO- Mobile Originated or MT - Mobile Terminated) is sent to the mobile number the IMEI. In this embodiment, the AAA can be programmed to send the necessary n times of "zero" SMSs, which are not visible to the subscriber to the mobile number. This will force the mobile device to perform an IMEI check, updating the IMEI server or EIR.

The limitations, which have to be considered in this embodiment, are firstly that it relies on the policy defined in the VLR of the network operator. Secondly, the X times of SMSs needed to force IMEI check should be selected to be low enough to avoid it taking too long to get the IMEI. If the number for n times is too high the activation of the data session which is requested by the mobile device may be delayed, causing bad quality of experience to the mobile subscriber or user.

On the other hand, this embodiment has the advantage, that limited effort regarding network changes is required.

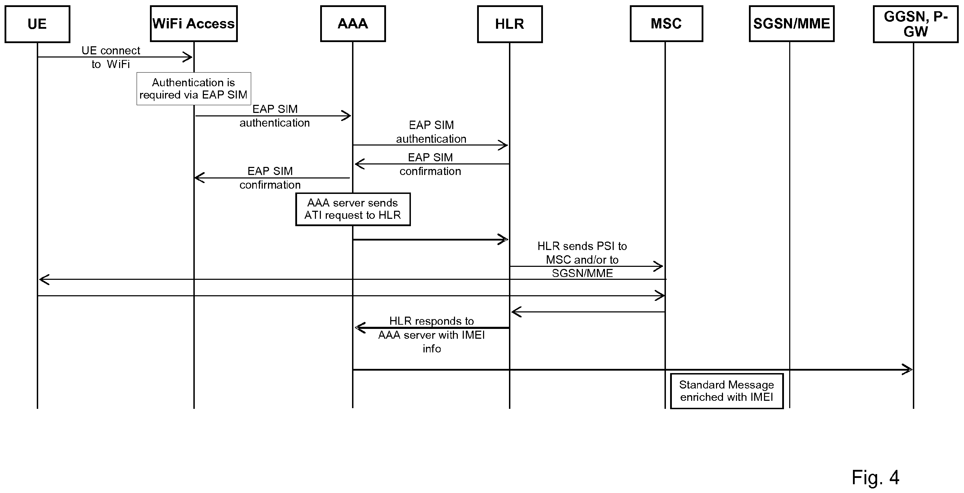

A second embodiment will now be described with reference to figures 3 and 4.

As can be derived from Figure 3, the mobile device is connected to the lower radio access network, which may also be referred to as a macro and is different from the wireless radio access network. The macro may for example be an LTE access network accessible via an eNodeB. If the mobile device moves from the macro to WiFi network, i.e. a wireless radio access network according to the invention, an authentication process will be initiated. For example upon connection to the WiFi, EAP SIM authentication may be required. In this authentication process, an EAP SIM request will be sent to the AAA, which is the authentication entity according to the present invention. A respective request will then be sent from the AAA to the HLR. If the user can be authenticated, the HLR will confirm the request in a EAP SIM confirmation. Upon receipt of this confirmation, an EAP SIM confirmation will be forwarded to the WiFi Access network from the AAA. At the same time or subsequently, the AAA will send an Any Time Interrogation ATI request for the IMEI of the mobile device to the HLR. The HLR will thereupon send a PSI to the MSC and/or to the SGSN / MME. Obtaining the IMEI from the mobile device will be carried out according to 3GPP standards, which are explained in further detail below. The MSC and/or SGSN /MME will respond to the PSI request with a PSI response to the HLR. The HLR in turn will then respond to the initial ATI request with an ATI response to the AAA. Thereby the relation between the MSISDN, which was provided during the EAP SIM authentication, and IMEI are available at the AAA. The AAA can then embed the obtained IMEI into a message to the access node for the core network. The IMEI can in particular be embedded into a message to the GGSN or P-GW, depending on the mobile packet core network used. The message which is enriched by the IMEI may for example be a Radius ACCT start message.

According to the second embodiment, hence a standard SS7 MAP message ATI (Any Time Interrogation) is preferably used. This message can be sent from the AAA to the HLR which will then locate the proper VLR of the subscriber and retrieve IMEI. In this situation, the AAA will act as a gsmSCF. The gsmSCF, as defined in the CAMEL standards, may request the HLR to obtain IMEI and MS classmark from the VLR (the same principle applies to the SGSN). According to the 3GPP standard the gsmSCF will indicate in the ATI request which information elements are required. These information elements may be Location information, Subscriber state, IMEI, MS classmark.

An example of the method according to the second embodiment may be described as follows:
1. Mobile device is connected to the macro and starts moving to WiFi
2. For authentication an EAP-SIM request is sent to the AAA server
3. AAA server sends request to HLR and HLR confirms
4. AAA server sends ATI request to HLR to retrieve subscriber IMEI information
5. Now the relation between the device, MSISDN and IMEI is available to the system (AAA server has the relation) and can pass it to the Wi-Fi systems.
6. User gets WiFi IP address via the DHCP server
   As this use case is considered to connect via a trusted network no further activities are required. In case of untrusted and the use of IPSec an EAP-SIM authentication is required to establish the IPSec tunnel.
7. User requests content located on the Internet via WiFi
8. LEA is setting a filter on that IMEI and as the system now has the relationship LI would be possible based on the IMEI

With respect to the 3GPP standards used in the second embodiment, it should be noted, that in CAMEL phases 1-3, ATI is restricted to retrieval of subscriber information from the CS domain. In CAMEL phase 4, ATI may also be used for retrieval of subscriber information from the PS domain. At the same time, ATI for the CS domain is enhanced. When gsmSCF sends ATI to HLR, it may include the domain, i.e. CS or PS. If no domain indication is provided, then CS domain is assumed. The gsmSCF cannot request information from both domains in one ATI request.

In the 3GPP standard the ATI for CS domain is defined as follows, wherein MS refers to the mobile device. ATI for the CS domain is enhanced with the capability to obtain additional information. The gsmSCF may request the HLR to obtain IMEI and MS classmark from the VLR. The gsmSCF will indicate in the ATI request which information elements are required:
- Location information - this is part of CAMEL phase 1; location information in ATI request may be accompanied by current location for the purpose of ALR; ALR is part of CAMEL phase 3.
- Subscriber state - part of CAMEL phase 1
- IMEI
- MS classmark

The standards furthermore define that the MSC may read the IMEI from the internal subscriber information store. If the MSC does not have the IMEI of the subscriber available, then it uses the DTAP message identity request to obtain the IMEI or IMEISV. The identity request DTAP message may be used to request various identifiers, amongst which are the IMEI or IMEISV. The MSC should in this case request the IMEISV. The MS may, in response, return IMEI or IMEISV

The MS reports its MS classmark 2 to the MSC every time a call is established, an SMS is transferred, etc. The MS classmark 2 may also be sent to the MSC at attach or at period location update. Hence, the MSC may have the requested MS classmark 2 available in the internal subscriber information store. Otherwise, the MSC will request the UE to report its MS classmark 2. If the subscriber's MS is switched off and the MSC does not have the IMEI of this subscriber available, then the MSC does not report the requested IMEI. When the gsmSCF requests IMEI or MS classmark it may be advisable to also request the subscriber state. If IMEI or MS classmark is not provided, and the reported subscriber state indicates not reachable, then the gsmSCF may deduce that the IMEI or MS classmark could not be provided due to the not reachable condition.

Although the capability to provide IMEI and MS classmark in MAP PSI-res is an optional CAMEL phase 4 feature, this capability of the MSC is not explicitly indicated in the offered CAMEL 4 CSIs parameter in MAP update location message to HLR. If the MSC does not support this capability, then it will ignore a request for IMEEI or MS classmark. The gsmSCF may for this reason accompany a request for IMEI or MS classmark with a request for location information. If IMEI or MS classmark is not provided and location information indicates that subscriber is in a VPLMN, then the gsmSCF may deduce from the VLR address that the MSC was not capable of providing IMEI or MS classmark.

According to the 3GPP standard, ATI for the PS domain has a similar information flow to ATI for CS domain. The support of MAP PSI by the SGSN is explicitly indicated to the HLR during GPRS location update. In this manner, the HLR knows whether it can send PSI to the SGSN. If sending PSI to the SGSN is not possible, then the HLR will return an error when it receives ATI for the PS domain for this subscriber. In addition, the gsmSCF may use ATSI to obtain the supported CAMEL phases and CAMEL phase 4 capabilities of the SGSN. The ATSI result may include PSI enhancements, which indicates that the SGSN supports PSI. Ehen the gsmSCF indicates the PS domain in ATI the HLR sends MAP PSI to the SGSN of the subscriber instead of to the MSC. The following information may be requested from a PS subscriber:
Location information: The SGSN shall supply the stored location information of the subscriber. If the request for location information is accompanied by current location, then the SGSN will attempt to page the subscriber, in order to refresh the location register and return the current location.
- Subscriber state: The SGSN will report the state of the PS subscriber. The following states may be reported:
- Detached - the subscriber is currently not attached to the SGSN
- CAMEL attached, MS not reachable for paging - The subscriber is attached without active PDP context but the SGSN has not received a periodic location update for a predefined duration
- CAMEL attached, MS may be reachable for paging - the subscriber is attached without active PDP context; the subscriber is assumed (by SGSN) to be reachable
- CAMEL PDP active, MS not reachable for paging - The subscriber is attached with one or more active PDP contexts, but there has not been radio contact for a predefined duration
- CAMEL PDP active, MS may be reachable for paging - the subscriber is attached with one or more active PDP contexts, the subscriber is assumed (by SGSN) to be reachable;
- Network determined not reachable - The HLR has indicated that the network can determine from its internal data that the MS is not reachable.

If the subscriber is not registered with an SGSN, then the HLR returns the value network determined not reachable. If the subscriber has one or more PDP contexts active, then the SGSN will also supply a set of descriptors per active PDP context. The elements that are reported per PDP context include amongst others, PDP type, PDP address, APN, GGSN address and QoS. When an internet based application receives a request for information from a user who identifies herself with MSISDN, then the ATI may be used to retrieve PDP context information. The application can then verify that the IP address of this user is currently in use by the MSISDN that was provided to the application

According to the present invention, the request of IMEI(SV) from SGSN shall follow the rules and flows that apply for the request of IMEI(SV) from MSC. The request for GPRS MS class from SGSN follows the rules that apply for the request of MS classmark 2 from MSC.

According to the present invention, preferably the AAA will act as a gsmSCF putting an ATI request to the HLR

Preferably, the steps, policies and procedures as defined in the standard for ATI for CS Domain and ATI for PS domain, as explained above, are followed in the method according to the present invention.

With the present invention it will be possible to receive the IMEI also for mobile devices connected via WiFi to the core network. The invention can be implemented with minor changes in different nodes, in particular mobile packet core network nodes.

Based on available infrastructure in the mobile packet core and the supporting nodes the MNO can choose which embodiment should be implemented.

This will allow the MNOs to support LI based on MSISDN or IMEI as mandatory required from legal and regulatory bodies.

## Claims

1. A method of improving security in a communication network comprising a mobile device, a core network, a mobile packet core network and a WIFI access network for access of the mobile device to the core network via the mobile packet core network, wherein an identification of the mobile device IMEI is determined during connection setup of the mobile device UE via the WIFI access network to the mobile packet core network,
wherein for interrogating the identification an authentication entity of the mobile packet core network triggers the mobile device UE to provide the identification of the mobile device IMEI to at least one entity of the mobile packet core network,
and wherein triggering for the provision of the identification of the mobile device IMEI is initiated from the authentication entity towards a further entity of the mobile packet core network,
wherein the further entity of the mobile packet core network is a short message service centre SMSC and the authentication entity triggers the short message service centre to send multiple zero text messages to the mobile device and the mobile device upon receipt of the multiple zero text messages sends its identification IMEI to an Equipment Identity Register EIR of the mobile packet core network, the authentication entity fetches the IMEI from the EIR,
or wherein the further entity of the mobile packet core network is a home location register HLR and the authentication entity sends a request for the identification of the mobile device IMEI to the home location register of the mobile packet core network, whereby the request is an ATI request, wherein the HLR sends a provide subscriber information PSI request to a mobile switching center MSC, serving GPRS support node SGSN/ mobility Management entity MME or a visitor location register VLR which then obtains the IMEl from the mobile device and updates the HLR with the IMEI, and the HLR responds to the ATI request from the authentication entity with the IMEI of the mobile device,
the authentication entity then sends a message enriched with the IMEI to an access node for the core network,
the access node carries out lawful interception on data connections of the mobile device in the core network based on the IMEI of the mobile device.

2. The method according to claim 1, wherein the authentication entity is an authentication, authorization and accounting AAA server of the mobile packet core network.

3. The method according to anyone of claims 1 to 2, wherein the communication between the mobile device and the mobile packet core network for interrogating the identification of the mobile device IMEI is carried out via a radio access network different from the WIFI access network.

4. The method according to claim 3, wherein the radio access network is GRAN, GERAN, UTRAN or E-UTRAN.

5. The method according to anyone of claims 1 to 4, wherein the authentication entity activates another entity of the mobile packet core to send at least one message to the mobile device.

6. The method according to anyone of claims 1 to 5, wherein the interrogated identification IMEI is embedded in an Radius ACCT start message, at the authentication entity and is sent to an access function connected to or located on the access node for the core network GGSN, P-GW, or to a trusted gateway SaMOG or 3G version of SaMOG.

7. The method according to anyone of claims 1 to 6, wherein the identification of the mobile device is checked at least when traffic is requested from the mobile device from the core network.

## Patentansprüche

1. Verfahren zur Verbesserung der Sicherheit in einem Kommunikationsnetz, aufweisend ein mobiles Gerät, ein Kernnetz, ein mobiles Paketkernnetz und ein WIFI Zugangsnetz für den Zugriff des mobilen Geräts auf das Kernnetz über das mobile Paketkernnetz, wobei eine Identifizierung des mobilen Geräts IMEI während des Verbindungsaufbaus des mobilen Geräts UE über das WIFI Zugangsnetz zum mobilen Paketkernnetz bestimmt wird,
wobei für die Abfrage der Identifikation eine Authentifizierungseinheit des mobilen Paketkernnetzes das mobile Gerät UE triggert, um die Identifizierung des mobilen Geräts IMEI für mindestens eine Einheit des mobilen Paketkernnetzes bereitzustellen,
und wobei das Triggern für das Bereitstellen der Identifikation des mobilen Geräts IMEI von der Authentifizierungseinheit in Richtung einer weiteren Einheit des mobilen Paketkernnetzes initiiert wird,
wobei die weitere Einheit des mobilen Paketkernnetzes ein Kurznachrichtendienstzentrum SMSC ist und die Authentifizierungseinheit das Kurznachrichtendienstzentrum triggert, um mehrere Null-Text-Nachrichtern an das mobile Gerät zu senden, und das mobile Gerät bei Empfang der mehreren Null-Text-Nachrichten seine Identifikation IMEI an ein Equipment-Identitäts-Register EIR des mobilen Paketkernnetzes sendet, wobei sich die Authentifizierungseinheit die IMEI von dem EIR holt,
oder wobei die weitere Einheit des mobilen Paketkernnetzes ein Heimatortregister HLR ist und die Authentifizierungseinheit eine Anforderung zur Identifizierung des mobilen Geräts IMEI an das Heimatortregister des mobilen Paketkernnetzes sendet. wobei die Anforderung eine ATI-Anforderung ist, wobei das HLR eine Bereitstellenvon-Teilnehmerinformationen PSI Anforderung an ein mobiles Vermittlungszentrum MSC schickt, das eine GPRS Unterstützungsknoten SGSN Mobilitäts-Management-Einheit MME oder ein Besucherortregister VLR bedient, welches dann die IMEI von dem mobilen Gerät erhält und das HLR mit der IMEI aktualisiert, und das HLR auf die ATI-Anforderung von der Authentifizierungseinheit mit der IMEI des mobilen Geräts antwortet,
wobei die Authentifizierungseinheit dann eine mit der IMEI angereicherte Nachricht an einen Zugangsknoten des Kernnetzes sendet,
und der Zugangsknoten eine rechtmäßige Überwachung von Datenverbindungen des mobilen Geräts in dem Kernnetz ausführt, basierend auf der IMEI des mobilen Geräts.

2. Verfahren nach Anspruch 1, wobei die Authentifizierungseinheit ein Authentifizierungs-, Autorisierungs- und Abrechnungs- AAA Server des mobilen Paketkernnetzes ist

3. Verfahren nach einem der Ansprüche 1 oder 2, wobei die Kommunikation zwischen dem mobilen Gerät und dem mobilen Paketkernnetz zur Abfrage der Identifikation des mobilen Geräts IMEI ausgeführt wird über ein Funkzugangsnetz, welches unterschiedlich zum WIFI Zugangsnetz ist.

4. Verfahren nach Anspruch 3, wobei das Funkzugangsnetz GRAN, GERAN, UTRAN oder E-UTRAN ist.

5. Verfahren nach einem der Ansprüche 1 bis 4, wobei die Authentifizierungseinheit eine andere Einheit des mobilen Paketkernnetzes aktiviert, um mindestens eine Nachricht an das mobile Gerät zu senden.

6. Verfahren nach einem der Ansprüche 1 bis 5,wobei die abgefragte Identifikation IMEI in einer Radius ACCT Start Nachricht bei der Authentifizierungseinheit eingebettet ist, und zu einer Zugangsfunktion gesendet wird, die verbunden ist mit oder angesiedelt ist im Zugangsknoten für das Kernnetz GGSN, P-GW, oder zu einem vertrauenswürdigen Gateway SaMOG oder 3G Version von SaMOG.

7. Verfahren nach einem der Ansprüche 1 bis 6, wobei die Identifikation des mobilen Geräts zumindest dann überprüft wird, wenn Verkehr vom mobilen Gerät vom Kernnetz angefordert wird.

## Revendications

1. Procédé pour améliorer la sécurité dans un réseau de communication comprenant un dispositif mobile, un réseau central, un réseau central par paquets mobile et un réseau d'accès Wifi pour l'accès du dispositif mobile au réseau central via le réseau central par paquets mobile, dans lequel une identification du dispositif mobile IMEI est déterminée durant un établissement de connexion du dispositif mobile UE via le réseau d'accès Wifi au réseau central par paquets mobile,
dans lequel, pour l'interrogation de l'identification, une entité d'authentification du réseau central par paquets mobile déclenche le dispositif mobile UE pour fournir l'identification du dispositif mobile IMEI à au moins une entité du réseau central par paquets mobile,
et dans lequel le déclenchement pour la fourniture de l'identification du dispositif mobile IMEI est lancé à partir de l'entité d'authentification vers une entité supplémentaire du réseau central par paquets mobile,
dans lequel l'entité supplémentaire du réseau central par paquets mobile est un centre de services de messages courts SMSC et l'entité d'authentification déclenche le centre de services de messages courts pour envoyer de multiples messages de texte zéro au dispositif mobile et le dispositif mobile, à la réception des multiples messages de texte zéro, envoie son identification IMEI à un registre d'identités d'équipement EIR du réseau central par paquets mobile, l'entité d'authentification extrait l'IMEI de l'EIR,
ou dans lequel l'entité supplémentaire du réseau central par paquets mobile est un registre de localisation d'origine HLR et l'entité d'authentification envoie une demande pour l'identification du dispositif mobile IMEI au registre de localisation d'origine du réseau central par paquets mobile, moyennant quoi la demande est une demande ATI, dans lequel le HLR envoie une demande de fourniture d'informations d'abonné PSI à un centre de commutation mobile MSC, un nœud de support GPRS de desserte SGSN/entité de gestion de mobilité MME ou un registre de localisation de visiteur VLR qui obtient ensuite l'IMEI à partir du dispositif mobile et met à jour le HLR avec l'IMEI, et le HLR répond à la demande ATI provenant de l'entité d'authentification avec l'IMEI du dispositif mobile,
l'entité d'authentification envoie alors un message enrichi avec l'IMEI à un nœud d'accès pour le réseau central,
le nœud d'accès exécute une interception légale sur des connexions de données du dispositif mobile dans le réseau central sur la base de l'IMEI du dispositif mobile.

2. Procédé selon la revendication 1, dans lequel l'entité d'authentification est un serveur d'authentification, d'autorisation et de comptabilité AAA du réseau central par paquets mobile.

3. Procédé selon l'une quelconque des revendications 1 à 2, dans lequel la communication entre le dispositif mobile et le réseau central par paquets mobile pour interroger l'identification du dispositif mobile IMEI est exécutée via un réseau d'accès radio différent du réseau d'accès Wifi.

4. Procédé selon la revendication 3, dans lequel le réseau d'accès radio est GRAN, GERAN, UTRAN ou E-UTRAN.

5. Procédé selon l'une quelconque des revendications 1 à 4, dans lequel l'entité d'authentification active une autre entité du réseau central par paquets mobile pour envoyer au moins un message au dispositif mobile.

6. Procédé selon l'une quelconque des revendications 1 à 5, dans lequel l'identification IMEI interrogée est incorporée dans un message de démarrage Radius ACCT, au niveau de l'entité d'authentification, et est envoyée à une fonction d'accès connectée ou située sur le nœud d'accès pour le réseau central GGSN, P-GW, ou à une passerelle de confiance SaMOG ou une version 3G de SaMOG.

7. Procédé selon l'une quelconque des revendications 1 à 6, dans lequel l'identification du dispositif mobile est vérifiée au moins quand un trafic est demandé à partir du dispositif mobile à partir du réseau central.
